# EUROPEAN PATENT APPLICATION

(11) **EP 2 144 163 A1**
(43) Date of publication of application: **13.01.2010**
(21) Application number: 08012348.2
(22) Date of filing: 09.07.2008
(51) Int. Cl.: G06F 9/46

(54) **Method and system for synchronizing the execution of a critical code section**

(71) Applicant: Software AG, 64297 Darmstadt (DE)
(72) Inventor: Trensch, Guido, 64665 Alsbach (DE)
(74) Representative: Heselberger, Johannes

(57) **Abstract**

The invention concerns a method for synchronizing the execution of at least one critical code section (C1) by at least one of a plurality of concurrent tasks (S1, Sn) of an application (4), the application (4) running on an operating system (5) providing cooperative multitasking, the critical code section (C1) being restricted to execution by only a limited number of the plurality of tasks (S1, Sn), the method comprising at least the following steps performed by at least one of the tasks (S1, Sn):
a. testing (F11) at least one variable (Mx) associated to the at least one critical code section (C1) and setting (F12) the variable (Mx) and entering the associated critical code section (C1), if the variable (Mx) is not set by another task (S1, Sn), or, waiting (F13) for a release (F22) by another task (S1, Sn) and releasing the CPU, if the variable (Mx) is already set by another task (S1, Sn); and
b. resetting (F21) the variable (Mx) and releasing (F22) at least one of the other waiting tasks (S1, Sn) when leaving the critical code section (C1);
c. wherein step a. is performed as an atomic function (F1).

## Description

### 1. Technical Field

The present invention relates to a method and system for synchronizing the execution of at least one critical code section by one of a plurality of concurrent tasks of an application running in a cooperative multitasking environment.

### 2. The Prior Art

Enterprises providing software applications adapted for a specific hardware platform or operating system are sometimes faced with the problem of porting such applications onto other systems, e.g. to reach a broader customer base for their product. Such applications may comprise a plurality of threads to create parallelism in program execution and thus to realize potential program performance gains. A thread in this context can be defined as a program task sharing resources with other threads running independently in the same address space. Different systems may have slightly different concepts of threads, sometimes called processes, tasks or subtasks. In the following, the term *task* is used as a generic term intended to comprise all of the various concepts.

In case of an application comprising a plurality of tasks, it is necessary to synchronize the access to a shared resource in order to avoid the simultaneous use of a common resource, which may cause the system to hang or crash or the resource to become inconsistent and unusable. Such a synchronization may be achieved by restricting the execution of the section of application code which manipulates the resource to a predefined number of simultaneous tasks at a given point in time. Such a piece of code is called a critical code section. However, while a critical code section may in many cases be related to the synchronization of the access to a shared resource, there may be critical code sections for other purposes, wherein the execution of the critical code section has to be synchronized among the tasks of the application.

When porting such applications, several technical problems may arise due to differences in system architecture and concepts. A particularly difficult situation is the porting of an application which was originally developed for running on a system providing preemptive multitasking onto a system providing cooperative multitasking.

Preemption is the act of temporarily interrupting a task being carried out by a computer system without requiring its cooperation and with the intention of resuming the task at a later time. The term preemptive multitasking is used to distinguish a multitasking operating system, which permits the preemption of tasks, from a cooperative multitasking system wherein tasks must be programmed to release the CPU, i.e. the processor time, when they do not need system resources.

Applicant has found that porting an application having the above described plurality of tasks onto a cooperative multitasking environment is a particular challenge. It is therefore the technical problem underlying the present invention to facilitate the porting of an application onto such an environment so that disadvantages such as system crashes or inconsistencies of resources are avoided.

### 3. Summary of the Invention

This problem is according to one aspect of the invention solved by a method for synchronizing the execution of at least one critical code section by at least one of a plurality of concurrent tasks of an application. The application runs on an operating system providing cooperative multitasking and the critical code section is restricted to execution by only a limited number of the plurality of tasks. In one embodiment, the method comprises at least the following steps performed by at least one of the tasks:
a. testing at least one variable associated to the at least one critical code section and setting the variable and entering the associated critical code section, if the variable is not set by another task, or, waiting for a release by another task and releasing a CPU, if the variable is already set by another task; and
b. resetting the variable and releasing at least one of the other waiting tasks when leaving the critical code section;
c. wherein step a. is performed as an atomic function.

Accordingly, the embodiment defines a way of restricting the execution of a critical code section to a limited number of tasks in a cooperative multitasking environment. This is achieved by an algorithm in combination with the atomic step a., which serves as a "guard" to the critical code section. It only allows a limited number of tasks to enter the critical code section and sets other tasks requesting access into a waiting status and forces them to release the CPU. When a task leaves the critical code section, it performs step b., so that another task is released from its waiting status.

In one aspect of the invention, the step of releasing at least one of the other waiting tasks comprises the step of informing the operating system that the critical code section is available for other tasks. The operating system may then decide which of the waiting tasks is released from its waiting status.

If the variable associated to the critical code section is of binary nature, i.e. it only can own the states on and off, the variable is called a mutex. A mutex (mutual exclusion) is used in concurrent programming to synchronize the simultaneous use of a common resource, such as global variables or file access due to critical code sections, i.e. exactly one task may have access at a time.

The atomicity of step a. is a crucial property in this context. Atomic means that step a. is performed as one single unit and cannot be interrupted. This is essential and synchronizes updates on the variable on machine or operating system level, respectively. With respect to the cooperative multitasking, it is furthermore important that in the case that a task has to wait in step a., it releases the CPU. These aspects are further described in the detailed description below.

In another embodiment of the present invention, a plurality of variables is associated to the at least one critical code section and the method further comprises the step of testing each of the plurality of variables and, if one of the variables is not set by another task, performing the atomic step a. on this variable, or, if all of the variables are already set by other tasks, performing the atomic step a. on any of the plurality of variables.

In other words, a counting semaphore is provided for restricting concurrent access to the critical code section to a predefined number of tasks. This is achieved by associating a plurality of variables to the critical code section, preferably *n* variables if *n* subtasks are allowed to process the critical code section at the same time. Examples for this concept of a counting semaphore are explained in the detailed description below.

In another aspect of the invention, the operating system comprises a runtime environment adapted for running only one task of the application and each of the tasks is attached to an instance of the runtime environment.

The application may in one embodiment be programmed in C and the operating system is adapted for running C-programs. However, embodiments with applications programmed e.g. in Cobol, PL1 or other programming languages are also possible.

In a preferred embodiment, the operating system is z/VSE. The variables are mapped onto resource control blocks and step a. is performed by the assembler macro ENQ of the z/VSE system. z/VSE provides a special concept of concurrent tasks, called subtasks. ENQ is an assembler macro provided by z/VSE which en-queues a subtask and protects a resource on operating system level in an atomic way and releases the CPU. In this context, ENQ may be used for performing the atomic step a.

In a further aspect of this embodiment, step b. is performed by the assembler macro DEQ of the z/VSE system. DEQ dequeues a resource and releases another subtask from wait on operating system level.

Both assembler macros ENQ and DEQ require a resource control block (rcb) as parameter. A rcb is a data structure holding information required by the operating system when executing both macros. Mutex and semaphore variables may be represented by such a rcb. In order to enable an application programmed in C to use the assembler macros ENQ and DEQ, they may be embedded into the C-program as assembler subroutines, as explained in the detailed description.

According to a further aspect of the present invention, a system for synchronizing the execution of at least one critical code section by at least one of a plurality of concurrent tasks of an application is provided. The application runs on an operating system providing cooperative multitasking and the critical code section is restricted to execution by only a limited number of the plurality of tasks. The system comprises a first function adapted for being called by at least one of the tasks, the first atomic function being further adapted for testing at least one variable associated to the at least one critical code section and, if the variable is not set, setting the variable and granting access for the task to the associated critical code section, or, if the variable is already set by another task, forcing the calling task to wait for being released by another task and to release the CPU. The system further comprises a second function adapted for being called by at least one of the tasks, the second atomic function being further adapted for resetting the variable and releasing at least one other waiting task when the calling task is leaving the critical code section. Furthermore, the first function is atomic.

Further advantageous modifications of embodiments of the method and the system of the invention are defined in further dependent claims.

### 4. Short Description of the Drawings

In the following detailed description, presently preferred embodiments of the invention are further described with reference to the following figures:
- Fig. 1:: An example of an application being ported onto an operating system providing cooperative multitasking;
- Fig. 2:: An example of two tasks entering a critical code section protected by a mutex;
- Fig. 3:: An example of two tasks entering a critical code section protected by a counting semaphore;
- Fig. 4:: A code fragment of an assembler subroutine performing ENQ;
- Fig. 5:: An exemplary C-program using the assembler subroutine;

### 5. Detailed Description

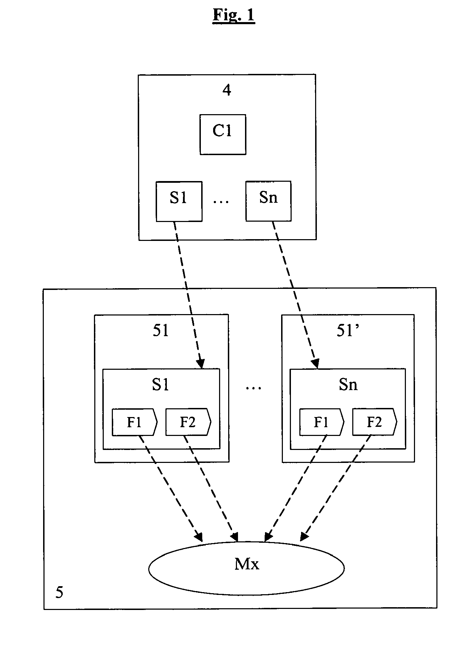

In the following, a presently preferred embodiment of the invention is described with respect to a system as schematically shown in Fig. 1. As can be seen, an application 4 comprising a critical code section C1 and a plurality of tasks S1, Sn is ported onto an operating system 5.

An application 4 depicted in Fig. 1 may be e.g. a pthread-application written in C being ported from e.g. a UNIX or UNIX like system onto a z/VSE mainframe system 5. However, it is to be noted that the present invention may also be implemented in a variety of other programming languages and / or operating systems.

Libraries implementing the POSIX threads standard are often named pthreads. Pthreads defines a set of C programming language types and procedure calls which enable an application using this library to achieve parallelism in program execution. As described above, such a parallelism in program execution may require mutex and semaphore functionality. A semaphore is a protected variable or abstract data type which constitutes the classic method for restricting access to shared resources. They exist in many variants. The term usually refers to a counting semaphore. In contrast, a binary semaphore is equivalent to a mutex.

Since neither pthreads nor mutexes and semaphores are supported on a higher level in the C language programming environment on z/VSE, these aspects have to be emulated on the z/VSE system 5. More particularly, an emulation of pthreads is needed which are running C program code under the control of the language environment (L/E) on z/VSE. Further, the emulation of mutexes and semaphores in such a context is also needed.

The first aspect is emulated by using of so called subtasks S1, Sn which provide a similar mechanism to pthreads under z/VSE. This is achieved by attaching a subtask S1, Sn, each of which represents a pthread, to a language environment instance 51, 51', called an enclave. This may be realized using a suitable assembler interface module. The C program 4 can then run as a C main program under the control of the established enclave.

As already described above, the z/VSE system 5 provides, on subtask level, cooperative multitasking. This needs to be taken into account for the emulation of semaphore and mutex functionality. E.g. if a CPU loop occurs in such an environment, no other subtask can continue processing, as explained in more detail below. Hence, it is of particular importance that an implementation must be thread-safe and release the CPU.

Thread-safety is a computer programming concept applicable in the context of multi-threaded programs. A code section is thread-safe if it functions correctly during simultaneous execution by multiple threads.

Both mutexes and semaphores require an atomic instruction allowing to test and set a variable. The prior art approach to achieve this is the usage of machine instructions like Compare and Swap (CS instruction) or Test and Set (TS instruction) applied to a variable (V in the metaprogram below), which are non-interruptable on a machine level. If the variable has already been set by another subtask, it may be tested in a loop, as shown in the following exemplary metaprogram:

```
 Loop: If (V = = 0) then                             // test
       Set V = 1 and Goto CriticalSection            // set (test and set is atomic)
      else
       Goto Loop
```

### CriticalSection:

```
 {
   ...
   Critical code section
   ...
 }
 
 Set V = 0
```

Under z/VSE, the loop requires a lot of CPU-time, which is unacceptable on a mainframe. More importantly, due to the cooperative multitasking, the subtask executing the loop will not release the CPU, i.e. another subtask which is in the critical code section will not have the chance to reset variable V. Consequently, the application will block.

Another prior art approach to the above example could be to include a wait for a particular time interval or a wait on an event which needs to be posted after the variable V is freed by the subtask which leaves the critical code section, as depicted in the following metaprogram:

```
 Loop: If (V = = 0) then                          // test
       Set V = 1 and Goto CriticalSection         // set (test and set is atomic)
      else
      {
         Wait on Event E                          // wait and release CPU
         Goto Loop
       }
```

### CriticalSection:

```
 {
   ...
   Critical code section
   ...
   Set V = 0
 }
```

### Post Event E

The above depicted example can be found implemented on platforms where mutex and semaphore functionality is not natively provided. However, there are possible scenarios that may cause a cooperative multitasking system to hang, because the testing and modification of the variable V is atomic but not the path in between the modification of V and the wait instruction. Especially under z/VSE, where multitasking is cooperative and the CPU is assigned to a particular subtask for a long time, a subtask switch very likely occurs when entering the wait but not when the subtask is in wait. This leads to the effect that a concurrently running subtask may reset variable V and post the event E while the other subtask is not yet in wait. When then this subtask enters the wait status, it will wait for the event E forever, because the event has already been posted at this point in time. According to the invention, test, set and wait therefore have to be performed in one non-interruptable, i.e. atomic, function.

In order to implement the above described command flows on a z/VSE system 5, the steps of testing F11, setting F12 and waiting F13 have to be atomic, as already described above.

Such a functionality is provided on operating system level by the assembler macros ENQ (enqueue a task and protect a resource) and DEQ (dequeue a resource and release another task from wait) of the z/VSE system 5, as depicted in the following metaprogram:

```
 ENQ(rcb)                                 // atomic on Operating System Level
 {
   ...
   Critical code section
   ...
   DEQ(rcb)
 }
```

rcb in the above listing is a so called resource control block. Both assembler macros ENQ and DEQ require a resource control block (rcb) as parameter. A rcb is a data structure holding information required by the operating system when executing both macros. The variable Mx may be mapped onto a rcb.

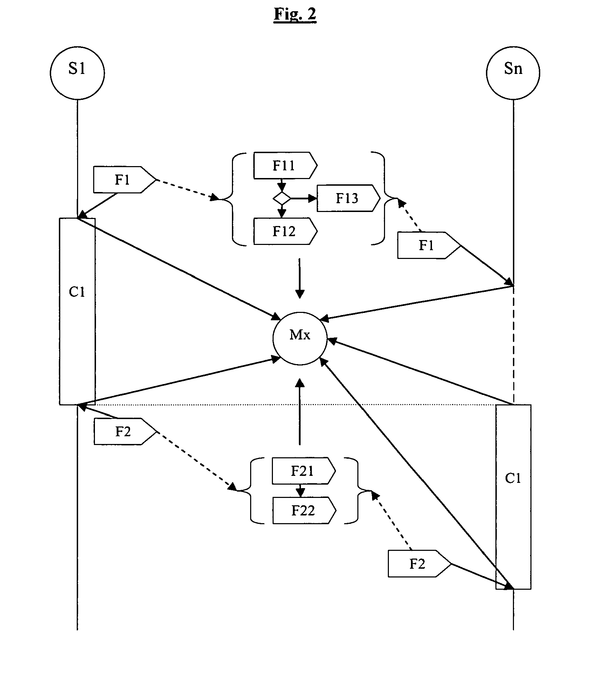

An example of two subtasks S1, Sn using such an atomic function F1 is depicted in Fig. 2. As can be seen, subtask S 1 requests access to the critical code section C1 by calling the atomic function F1. The atomic function F1 then performs the steps of testing F11 if a variable Mx is already set by another subtask. Assuming that the subtask S1 is the first to request access to the critical code section C1, the variable Mx is then set F12 and access to the critical code section C1 is granted for the subtask S1. As can be further seen in Fig. 2, while subtask S1 is in the critical code section C1, the subtask Sn also requests access by calling the atomic function F1. Since the variable Mx is already set by the subtask S1, the subtask Sn has to go into wait F13, which is depicted by the dotted vertical line in Fig. 2. Only after the subtask S1 leaves the critical code section C1, which is indicated by calling the second function F2, the variable Mx is reset F21 and the waiting subtask Sn is released F22 from its waiting status. It now may enter the critical code section C1. Since the above described scenario grants access to exactly one subtask at a time to the critical code section C1, it employs a mutex.

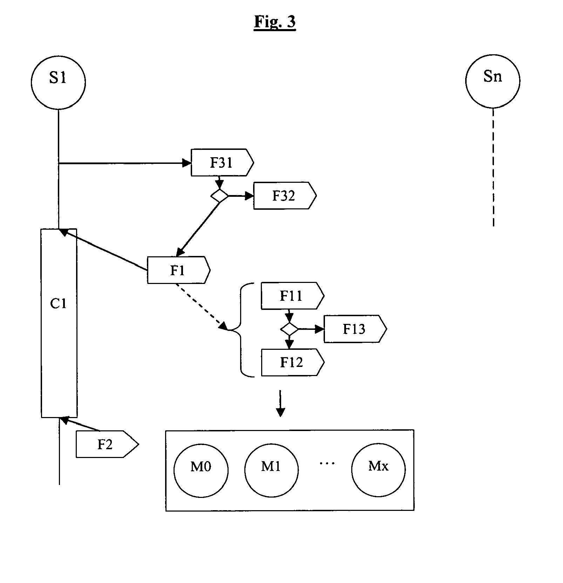

A counting semaphore may be emulated under z/VSE by multiple mutex variables, i.e. multiple rcbs one for each counter value, e.g. organized in a list, as depicted in Fig. 3. Fig. 3 shows that a plurality of variables M0, M1, Mx are associated to the critical code section C1. The process of requesting access to the critical code section C1 then comprises the additional steps of searching through the list of variables M0, M1, Mx and testing F31 each of them. If one of the variables M0, M1, Mx is not set by another subtask S1, Sn, the subtask which is requesting access performs the atomic function F1 on this variable, similarly to the example depicted in Fig. 2. In the other case, i.e. all of the variables M0, M1, Mx are already set be other subtasks, the subtask which is requesting access performs the atomic function F1 on any of those variables. This provokes that the subtask is forced into the waiting status. In the latter case, the subtask may pick one of the variables M0, M1, Mx randomly F13, or in another suitable way.

It should be appreciated that the examples depicted in Fig. 2 and 3 are only one of a variety of possible scenarios and that the invention particularly works for any number of subtasks and critical code sections.

The following metaprogram shows the instructions performed with regard to a counting semaphore:

```
 s = scnt
 Loop: If (rcb_s = free) then
        Goto Enqueue
      else
      {
        s=s-1
        if (s > 0) then
          Goto Loop
        else
         {
          s = random (1 .. s)
          Goto Enqueue
        }
      }
 Enqueue: ENQ(rcb_s)                     // atomic on Operating System Level
 {
   ...
   Critical code section
   ...
   DEQ(rcb_s)
 }
```

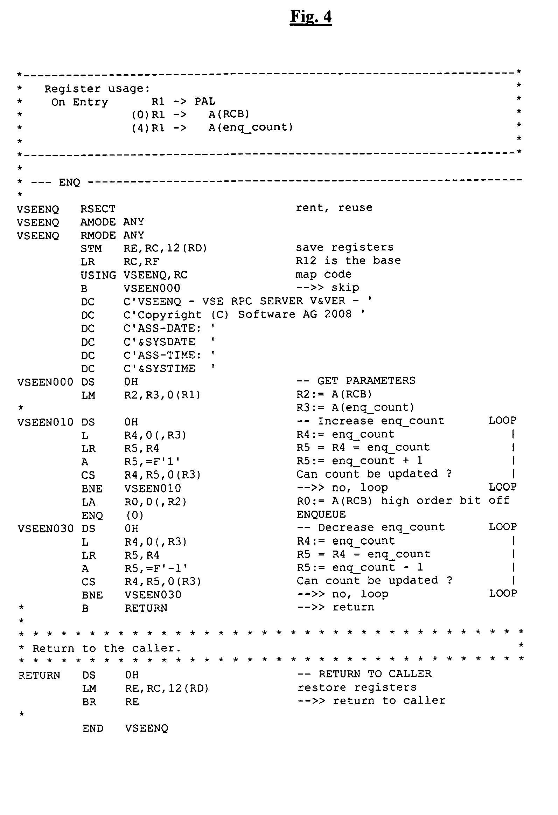

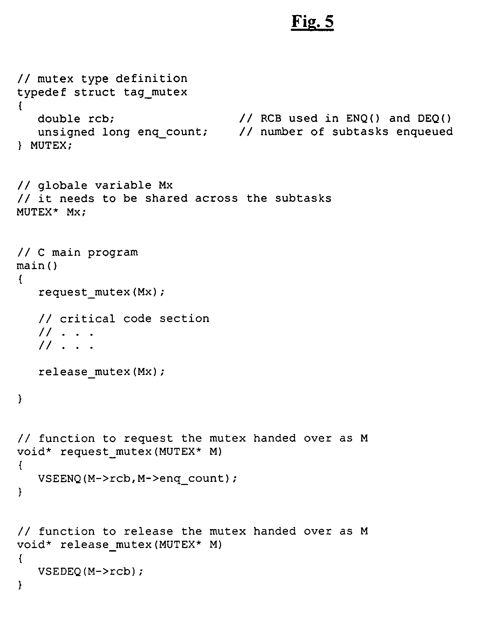

To finally enable a C-application to use the ENQ and DEQ macros, they have to be embedded into the C programs as assembler subroutines, which is depicted in Fig. 4. An exemplary use of such an assembler subroutine is depicted in the exemplary C-program in Fig. 5.

## Claims

1. A method for synchronizing the execution of at least one critical code section (C1) by at least one of a plurality of concurrent tasks (S1, Sn) of an application (4), the application (4) running on an operating system (5) providing cooperative multitasking, the critical code section (C1) being restricted to execution by only a limited number of the plurality of tasks (S1, Sn), the method comprising at least the following steps performed by at least one of the tasks (S1, Sn):
a. testing (F11) at least one variable (Mx) associated to the at least one critical code section (C1) and setting (F12) the variable (Mx) and entering the associated critical code section (C1), if the variable (Mx) is not set by another task (S1, Sn), or, waiting (F13) for a release (F22) by another task (S1, Sn) and releasing a CPU, if the variable (Mx) is already set by another task (S1, Sn); and
b. resetting (F21) the variable (Mx) and releasing (F22) at least one of the other waiting tasks (S1, Sn) when leaving the critical code section (C1);
c. wherein step a. is performed as an atomic function (F1).

2. The method of claim 1, wherein the step of releasing (F22) at least one of the other waiting tasks (S1, Sn) comprises the step of informing the operating system (5) that the critical code section (C1) is available for other tasks (S1, Sn).

3. The method of claim 1 or 2, wherein a plurality of variables (M0, M1, Mx) is associated to the at least one critical code section (C1) and the method further comprises the step of:
c. testing (F31) each of the plurality of variables (M0, M1, Mx) and, if one of the variables (M0, M1, Mx) is not set by another task (S1, Sn), performing the atomic step a. on this variable, or, if all of the variables (M0, M1, Mx) are already set by other tasks (S1, Sn), performing the atomic step a. on any (F32) of the plurality of variables (M0, M1, Mx).

4. The method of any of the preceding claims, wherein the operating system (5) comprises a runtime environment adapted for running only one task of the application (4), and wherein each of the tasks (S1, Sn) is attached to an instance of the runtime environment (51, 51').

5. The method of any of the preceding claims, wherein the application (4) is programmed in C and the operating system (5) is adapted for running C-programs.

6. The method of any of the preceding claims, wherein the operating system (5) is z/VSE, wherein the variables (M0, M1, Mx) are mapped onto resource control blocks and wherein step a. is performed by the assembler macro ENQ of the z/VSE system.

7. The method of the preceding claim, wherein step b. is performed by the assembler macro DEQ of the z/VSE system.

8. A computer program comprising instructions adapted for implementing a method according to any of the preceding claims.

9. A system for synchronizing the execution of at least one critical code section (C1) by at least one of a plurality of concurrent tasks (S1, Sn) of an application (4), the application (4) running on an operating system (5) providing cooperative multitasking of a CPU, the critical code section (C1) being restricted to execution by only a limited number of the plurality of tasks (S1, Sn), the system comprising:
a. a first function (F1) adapted for being called by at least one of the tasks (S1, Sn), the first atomic function (F1) being further adapted for testing (F11) at least one variable (Mx) associated to the at least one critical code section (C1) and, if the variable (Mx) is not set, setting (F12) the variable (Mx) and granting access for the task (S1, Sn) to the associated critical code section (C1), or, if the variable (Mx) is already set by another task (S1, Sn), forcing the calling task (S1, Sn) to wait (F13) for being released (F22) by another task (S1, Sn) and to release the CPU; and
b. a second function (F2) adapted for being called by at least one of the tasks (S1, Sn), the second atomic function (F2) being further adapted for resetting (F21) the variable (Mx) and releasing (F22) at least one other waiting task (S1, Sn) when the calling task (S1, Sn) is leaving the critical code section (C1);
c. wherein the first function is atomic.

10. The system of claim 9, wherein the second atomic function (F2) is further adapted for informing the operating system (5) that the critical code section (C1) is available for other tasks (S1, Sn).

11. The system of claim 9 or 10, wherein a plurality of variables (M0, M1, Mx) is associated to the at least one critical code section (C1) and the system further comprises a function adapted for testing (F31) each of the plurality of variables (M0, M1, Mx) and, if one of the variables (M0, M1, Mx) is not set, performing the first atomic function (F1) on this variable, or if all of the variables (M0, M1, Mx) are already set, performing the first atomic function (F1) on any (F32) of the plurality of variables (M0, M1, Mx).

12. The system of any of the claims 9-11, wherein the operating system (5) comprises a runtime environment adapted for running only one task of the application (4), and wherein each of the tasks (S1, Sn) is attached to an instance of the runtime environment (51, 51').

13. The system of any of the claims 9-12, wherein the application (4) is programmed in C and the operating system (5) is adapted for running C-programs.

14. The system of any of the claims 9 - 13, wherein the operating system (5) is z/VSE, wherein the variables (M0, M1, Mx) are mapped onto resource control blocks and wherein the first atomic function (F1) is adapted for calling the assembler macro ENQ of the z/VSE system.

15. The system of claim 14, wherein the second function (F2) is adapted for calling the assembler macro DEQ of the z/VSE system.
